# EUROPEAN PATENT APPLICATION

(11) **EP 2 248 416 A1**
(43) Date of publication of application: **10.11.2010**
(21) Application number: 09715485.0
(22) Date of filing: 25.02.2009
(51) Int. Cl.: A01K 63/04

(54) **SPLASH SUPPRESSING DEVICE FOR WATER TANK**

(30) Priority: 26.02.2008 JP 2008045040
(71) Applicant: Takada, Shunsuke, Meguro-ku Tokyo 152-0022 (JP)
(72) Inventor: Takada, Shunsuke, Meguro-ku Tokyo 152-0022 (JP)
(74) Representative: Betten & Resch
(86) International application number: PCT/JP2009/053353
(87) International publication number: WO 2009/107630

(57) **Abstract**

A splash suppressing device for a water tank is provided with a housing (3) mounted inside a water tank, having a cavity therein, having an opening in a portion of the bottom side thereof which is submerged under water in the water tank, and having a closed upper side; a fixing member (15) for fixing the housing (3) to the inner wall of the water tank; an air stone (5) mounted in the cavity of the housing; a connecting section (8) provided to a part of the housing and connected to an air tube (7) from an external air pump (10); and an air introducing path (9) for interconnecting the connecting section (8) and the air stone (5) to allow flow of gas. The air introducing path (9) can be easily replaced.

## Description

### TECHNICAL FIELD

The present invention relates to a splash suppressing apparatus for water tank for suppressing beforehand the splash of bubble which is generated by burst of air bubbles near the water surface in the case of supplying oxygen into a water tank for aquarium fishes by an air stone etc.

### BACKGROUND

Generally, it is necessary to supply an amount of dissolved oxygen for such as an aquarium fish and a seaweed, in the tank for aquarium fish, such as tropical fish and a goldfish. Therefore, introducing air bubbles in a tank is performed by supply means of air like the air pump installed outside.
Conventionally, the bubble of the air at the time of the supplemental oxygen in a tank is automatically emitted from inside of water to water surface in the tank. In many cases, a glass lid or a plastic lid, etc. are set on the upper surface of tank for preventing running out of an aquarium fish and mixing with dust within air.

By the way, at the time of oxygen supply within the water tank for aquarium fishes, the bubble of air is emitted from an air stone, goes up almost, perpendicularly, and reaches to the water surface. And this bubble disperses on a water surface quickly in a large range by the stream produced by rise of the bubble.
Various troubles occur around it by the splash produced when the bubble which dispersed in this large range bursts. For example, it may adhere to a glass in the state like a white residual substance. This is because the various ingredients which have melted in water dry on the surface of the glass even if it is fresh water. Moreover, when a bubble bursts broadly, troubles, such as generating of scale and a seaweed, may occur. Furthermore as for the tanks, such as a saltwater fish, phenomenon what is called salt adherent may occur.

As a solution for coping with such a problem, this applicant previously prepares the container of the hollow arranged in an aquarium fish tank that an opening might be hidden underwater as a container for preventing scattering of the bubble of the air at the time of the supplemental oxygen within an aquarium fish tank. And this applicant proposes an apparatus in which the air stone is contained (refer to patent document 1).
Moreover, It is characterized in having a case which stores the air stone arranged underwater, a tube hole for passing the tube connected to the air stone formed in the case, and an opening which makes water flow into the space where the air stone in the case was stored, as what improved such apparatus (refer to patent document 2).

Patent Document 1: Japanese Unexamined Patent Application Publication No.2000-93941
Patent Document 2-Japanese Utility Model Application No. 3128595

### DISCLOSURE OF INVENTION

It is possible to prevent scattering of the bubble of the air at the time of the supplemental oxygen within an aquarium fish tank with the container and the fixtures for tanks described in the patent, document 1 or the patent document 2. However, when using it for a long time, by time-varying of an air tube, trouble may arise in supply of air or the tube itself may become dirty by generating of an alga, scale, etc. in the portion which always touches water.
Therefore, removal of the whole tube etc. will be required for exchange of the parts which arises trouble by prolonged use or became dirty, and the exchange produces a not easy problem.

Therefore the present invention made for providing a splash control apparatus for tanks having the structure where exchange of the parts which trouble produced by prolonged use and an unclean parts becomes easy, in view of the technical subject mentioned above.

### SUMMARY OF THE INVENTION

In order to solve an above-mentioned technical subject, the present invention provides with a splash control apparatus for water tank characterized in comprising: a case which is arranged inside a tank and has hollow body, in which an opening is formed in a part of a side of a bottom which sinks within the tank and an upper part side is closed; a fixing element for fixing the case to an inner side wall part of the tank; an air stone set to the hollow part of the case; a connecting portion which is set in a part of the cases and connected with an air tube from an external air pump; and an air introduction path for connecting between the connecting portion and the air stones so that gaseous circulation may be possible.

According to the splash control apparatus of the present invention, an air stone is set to the hollow portion is connected outside of the case through the opening which is formed a part of the bottom port side. For this reason, the oxygen comes to melt into water in that circumference by the air bubbles generated in the air stone, the oxygen melt into the water is used outside of the case. Although the air of predetermined pressure is sent from an external air pump and an air stone outputs air bubbles, the air stone and an external air pump are not connected by the air tube directly, but the air tube is connected to a connection part which is set in a part of the case. And the air introduction path connects between the connection part and the air stone so that gaseous circulation might be possible.

### EFFECT OF THE INVENTION

According to the splash control apparatus of the present invention having such configuration, the air stone and an external air pump are not connected by the air tube directly, but the air tube is connected to a connection part which is set in a part of the case. And the air introduction path connects between the connection part and the air stone so that gaseous circulation might be possible.
Therefore even if it was the case where the air introduction way itself deteriorated etc. by change with time, it is possible to cope with the troubles and dirty by exchanging the air introduction pathway itself, and the exchange work is also easy.

### BRIEF DESCRIPTION OF DRAWINGS

Fig. 1 is a perspective view of the splash control apparatus for tank of the first embodiment.
Fig. 2 is a diagram showing the operational status of the splash control apparatus for tank of the first embodiment of the present invention.
Fig.3 is a modification of the splash control apparatus for tank of the present invention, and is a diagram showing the example set in the reverse valve and a connection portion.
Fig.4 shows a modification of the splash control apparatus for tank of the first embodiment, and shows the example of the splash control apparatus for tanks having the triangular prism-like case.
Fig. 5 shows a modification of the splash control apparatus for tank of the first embodiment, and shows the example of the splash control apparatus for tanks having the case of trapezoid multiple pillar form in a horizontal cross section.
Fig.6 shows a modification of the splash control apparatus for tanks of the first embodiment, and shows the example of the splash control apparatus for tanks having the semicircle pillar-like case.
Fig.7 shows a modification of the splash control apparatus for tanks of the first embodiment, and shows the example of the splash control apparatus for tanks having the pillar-shaped case which a part of side is plane.
Fig. 8 is a perspective view of the splash control apparatus for tank of the second embodiment.
Fig. 9 is a partial perspective view of an example of a modification of the splash control apparatus for tank of the second embodiment,

### EXPLANATION OF MARKS

- 1: splash control apparatus for tank
- 3, 31∼34: case
- 4: opening portion
- 5: air stone
- 6: hollow body
- 7: air tube
- 8: connecting portion
- 9: air introduction pipe
- 10: external air pump
- 11: upper portion
- 13: bottom portion
- 15: suction cup
- 21: water tank
- 22: air bubbles
- 23: water surface
- 28: connecting portion
- 51: air tube
- 52: connecting portion
- 53: air introduction pipe
- 54: air tube
- 55: upper-part tubular portion
- 56: air stone
- 57: case
- 58: suction cup
- 59: lid portion
- 60: hollow portion
- 61: bottom portion
- 62: opening
- 63: external air pump
- 64: hole
- 70: lid portion

### BEST MODE FOR CARRING OUT THE INVENTION

### [First Embodiment]

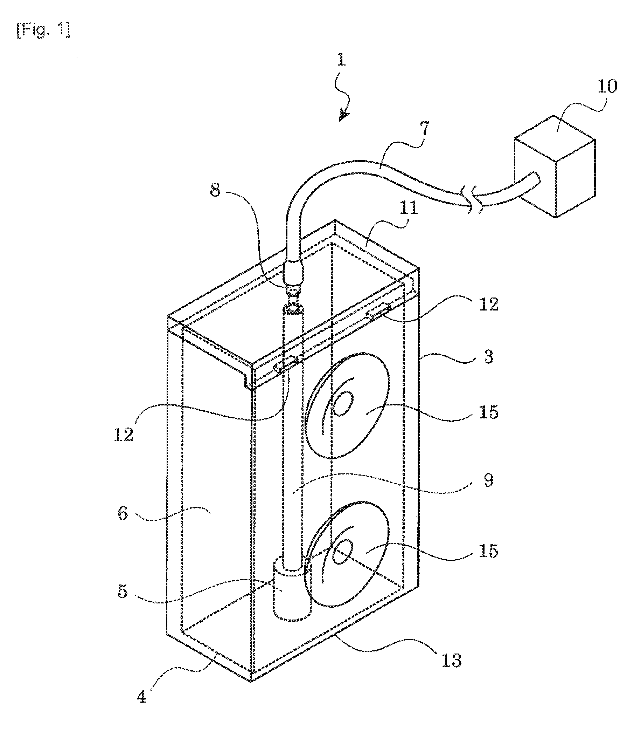

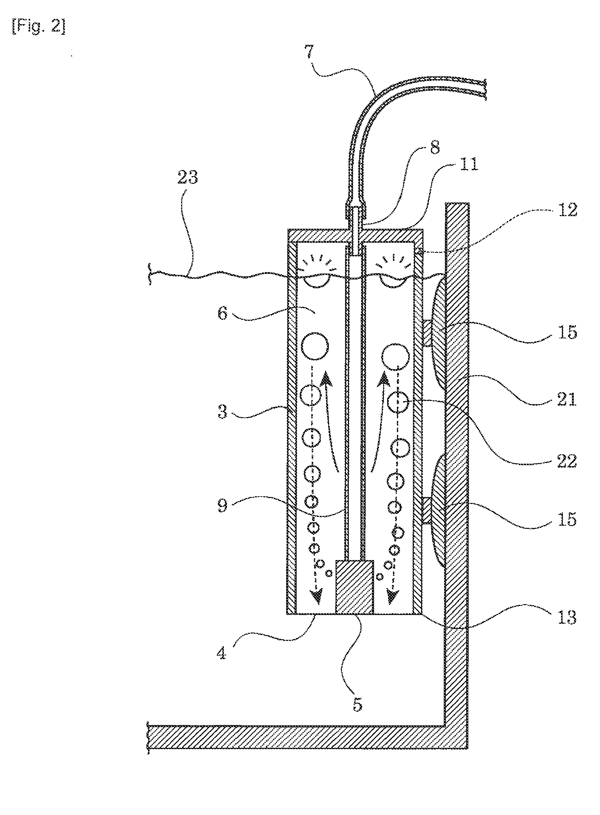

The preferable embodiment of the present invention is explained referring to figures. Fig. 1 is a perspective view of the splash control apparatus for tank of the first embodiment, and Fig. 2 is a diagram showing the situation at the time of discharge of the air bubbles.
As shown in Fig.1, splash control apparatus for tank 1 of the present embodiment has a features that it has a case 3 which is positioned inside of the water tank, hollow body, which has opening of potion of bottom side which is under water in the water tank and upper side is blockaded, a pair of suction cups 15 which function as a fixing material for fixing the case 3 to the inner side wall of the tank, a air stone 5 which is positioned in the hollow body 6 of the case 3, a connecting portion 8 which is connected with the air tube 7 from the external air pump 10 and installed in a part of the case 3, and a air introduction pipe 9 which functions as an air introduction path which connects between the connecting portion 8 and the air stone 5 so that gaseous circulation may be possible.

Here, the case 3 comprises transparent resin material, such as polystyrene etc. which can be formed comparatively cheaply and in large quantities, and a change with the passage of time is small even if it touches water for a long time. The case 3 has an outside shape of a box type in the present invention, and a opening portion 4 which forms opening of rectangle which covers whole of bottom surface at a bottom portion 13 of the case 3.
However the case 13 is not limited to transparent resin material, translucent material or colored material may be used.
The case 3 has a function to prevent that the splash of the air bubbles generated on the water surface reaches far and wide by stopping the air bubbles generated in the air stone 5 in the hollow body 6.
When the air stone 5 is located in the case 3 and air ration is secured enough with the air bubbles produced from the air stone 5, any kind of size may be sufficient for the case 3.
When the size of the case 3 is too big compared with a water tank, the swimming domain of an aquarium fish will be reduced. When the size of the case 3 is too small compared with the water tank, the air bubbles from the air stone 5 do not fully contact a surrounding liquid underwater, and there is a possibility the air ration will be poor.
As size of such the case 3, the size whose perpendicular length is about 5 to 40cm and whose horizontal section is 2x4cm to about 4x8cm is illustrated, for example.

In the first embodiment, although the form of the case 3 has box type form, the form of a cylinder which is mentioned later, other multiple columns, for example, a triangular prism, a pentagonal prism, a hexagon pillar, etc. may be sufficient as it, and it can be arbitrarily set up according to the swimming domain of the form of a tank, or an aquarium fish.
Moreover, the opening portion 4 which forms the opening to the bottom portion 13 of the box type case 3, the opening opens the whole of the bottom surface in a shape of a rectangle mostly, and the water in a tank flows in and out the hollow body 6 of the case 3 through this opening portion 4. Although the opening portion 4 is formed in the bottom of the case 3, as long as it is a potion which make the case 3 hidden underwater, the opening may be formed at other portions. Further the form of the opening may not be limited in the shape of a rectangle, either, but other form may be sufficient. In addition, the netted lid part which restrict fish go and out and does not restrict a stream may be set while covering the opening portion 4 of the bottom portion 13.

The lid part 11 which is attachable and detachable or can be opened and closed is set on the upper part of the case 3, except for the hole 12, the space of upper side of water surface is shut by the upper portion 11 of the case 3 and the upper part of the case 3. Therefore the air bubbles which exploded by this and its splash do not scatter in the exterior of the case 3.
That is, when a tank is equipped with the splash control apparatus for tank 1, the upper portion 11 of the case 3 is positioned above the water surface in the tank, and the bottom portion 13 of the case 3 is positioned under water. The water surface of the tank is located in the inside of the hollow body 6 of the case 3 at the portion near the upper part side, and, air exists upper side of it. Although it bursts, and air bubbles brings splash and disperses on the water surface inside the hollow body 6, since this is a phenomenon produced inside the case 3, the splash does not reach the exterior of the case 3. Therefore, dissolution of the oxygen from the air stone 5 can be made to continue, without generating dirt etc. in the inner wall of the tank. Moreover, the dirt inside the case 3 can be simply cleaned by the upper portion 11 which can be opened and closed freely as mentioned above. A pair of long and slender holes 12 penetrated within and without the case 3 are formed in the portion which the upper portion 11 opens and closes. The air of the air bubbles which exploded can be gradually emitted to the case exterior through the hole 12. In addition, the number of holes 12 is not limited to one pair, but further two or more holes may be prepared.

A suction cup 15 functions as a fixing part material for fixing the case 3 to the inner side wall part of a tank, and is constituted by necessary rubber system material.
In the present embodiment, the rear anchor part side of a suction cup 15 is attached to the case 3, and the suction cup 15 is attached so that the sucker side of the suction cup 15 may turn to the outside of the case 3.
The suction cup 15 may be a double-sided sucker. Moreover, you may make the total of a sucker into the singular number in projecting by replacing one sucker by a convex portion in order to make the field of the case 3 parallel to the wall in a tank.
Moreover, a fixed component which is hung from the upper end of the tank besides the sucker may also be used. Moreover, a fixed component which is inserted and fixed to the ground and sand of a tank bottom may also be used. Moreover, it is also possible to fix by the method of combining with accessories, such as driftwood and a stone.

The air stone 5 has the function to introduce oxygen to living things which inhabit an inside at a tank, such as an admiration fish and a seaweed by introducing underwater the air supplied from an air tube in the form of air bubbles, and melts and becomes precocious about oxygen in the water of the tank around the air bubbles.
In addition, in this specification, it is understood as an appreciation fish by the wide sense, and the various pets which live in the environment in underwater, such as a shrimp which can generally be bred in a tank, a shellfish, jellyfish and plankton, or the water surface are included.
Although the air stone 5 is exampled in this embodiment, air stones may be other form and may be material, such as wood which is comparatively alike and is made to generate small air bubbles, and ceramics, glass.

In the splash control apparatus for tank 1 of the first embodiment, the air from the external air pump 10 is not directly carried with pressure to the air stone 5. The air tube 7 connected to the external air pump 10 is connected to the upper tube portion of the connecting portion 8 formed on the upper portion 11 of the case 3 in the state that a diameter of the end is extended a little, and a air introduction pipe 9 which connects between the connecting portion 8 and the air stone 5 is attached to the bottom tubular portion of the connecting portion 8 so that gaseous circulation may be possible.
Generally, although the air tube 7 is resin with flexibility and it consists of materials strong against degradation with the passage of time in view of the environment, elasticity may be lost by underwater prolonged use etc., or dirt may be conspicuous.
Here, the air introduction pipe 9 is made of comparatively hard plastic materials or glass material rather than an air tube, and preferably it is made of plastic materials and glass material which even if it touches the water which contains oxygen for a long time degradation is small.
By selecting comparatively hard plastic material, also when exchanging the air introduction pipe 9, it is easy for a worker to grasp it, and only the air introduction pipe 9 can be exchanged certainly.
Moreover, you may set a short air tube between the air introduction pipe 9 and the air stone 5, and between the air introduction pipe 9 and the connecting portion 8.

The connecting portion 8 is the component set on the upper portion 11 of the case 3, and has a cylindrical form and an air passage extended in the direction of an axis which is the up-and-down direction.
The air tube 7 connected to the external air pump 10 is connected to the upper part tubular portion of the connecting portion 8. The air introduction pipe 9 is inserted and attached to the outside of the bottom tubular portion of the connecting portion 8.
The air stone 5 and the air introduction pipe 9 may be formed in a single body. Further the air introduction pipe 9 may be set independently for exchange of the air introduction pipe 9, and the air introduction pipe 9 may be inserted to a air introduction port like a usual air stone.
At least a part of the air introduction pipe 9 is used in a state where a part of it is sink in water for a long time by the configuration in which the connecting portion 8 is set.
Although ingredients, such as an organic matter and a mineral, also influence the adjusted water within the aquarium fish breeding environment in a tank and degradation of resin occurs somewhat, the air introduction pipe 9 can be exchanged certainly in that case, and the clearing work is easy. Therefore it is easy to keep the tank no dirty always.
On the other hand, in the splash control apparatus for tank 1 of the present embodiment, since it is also controlled that splash scatters to the case 3, the air tube 7 functions as a supply way of air, without touching water almost. Therefore, the air tube 7 has the advantage that the splash control apparatus for tank 1 can be operated at a long period of time while the air tube 7 is connected with the connecting portion 8.

Fig. 2 is a diagram showing the state at the time of operation of the splash control apparatus for tank 1 of the first embodiment. The air supplied with pressure from the external air pump reaches to the connecting portion 8 through the air tube 7.
The path of air is extended to the connecting portion 8 in the direction of an axis, the air which passed the connecting portion 8 reaches to the air introduction pipe 9 extended to the lower part of the water surface 23 of the water tank 21, and the air from the air introduction pipe 9 is supplied to the air stone 5 connected at the end of the air introduction pipe 9.
In the air stone 5, water, the supplied water is emitted to the hollow body 6 of the case 3 in which water is filled about 80 or 90 % in the tank from the surface of the air stone 5 as air bubbles. By the emission of the air bubbles in the hollow body 6 inside, the air bubbles 22 goes up gradually against the stream of the tank from a top of the position of the air stone 5 to the bottom, and reaches to the water surface 23 inside the hollow body 6.
Thus, as described above when it reaches to the water surface 23, although the air bubbles 22 maintains the spherical film of a bubble only slight time, it broke immediately and the portion which formed the film of the surface of the bubble bursts as splash on the water surface 23.
However, since it restricts that the air bubbles 22 go up only in the case 3, the splash which burst on the water surface 23 will also be restricted to the inside of the case 3, and the bad influence of the splash around the splash control apparatus for tank 1 will be prevented beforehand. As mentioned above, since it has the upper portion 11 which can be opened and closed freely, the dirt of the case 3 inside can be cleaned simply.

Further, according to the splash control apparatus for tank 1 of the first embodiment, the air bubbles 22 outputted from the surface of the air stone 5 goes up to the water surface 23 while resisting the water stream from up to down which is occurred within comparatively narrow area which is the hollow body 6 of the case 3.
Therefore, compared with the case where air bubbles are generated automatically without using the case 3, the air bubbles 22 will be rubbed within the hollow body 6 of the case 3, and can increase the amount of dissolved oxygen with respect to the quantity of the air bubbles 22.
Since the air bubbles 22 are reached continuously, the pressure of the portion of collected air on the water surface 23 of the hollow body 6 becomes higher than atmospheric pressure, and the quantity of the oxygen which melts in the water can be raised.
Further, it is also possible to prepare the small hole for discharging the air which stagnated near the upper portion 11 or the connecting portion 8 in the case 13.

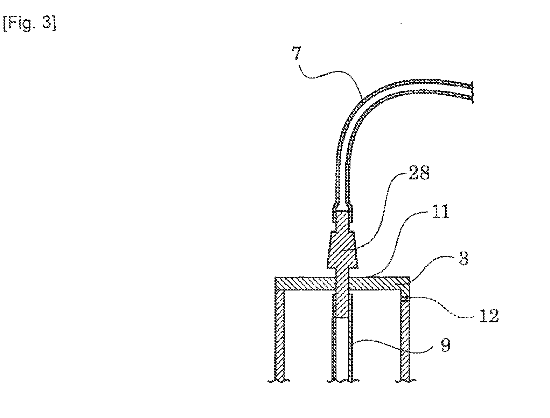

Moreover, as shown in Fig. 3, the connecting portion 28 may be configured by combining with protect reverse valve for the scram of an external air pump. By using the connecting portion 28 which has such a protect reverse valve for the introductory part of air, the damage to the external pump etc. can be prevented beforehand.

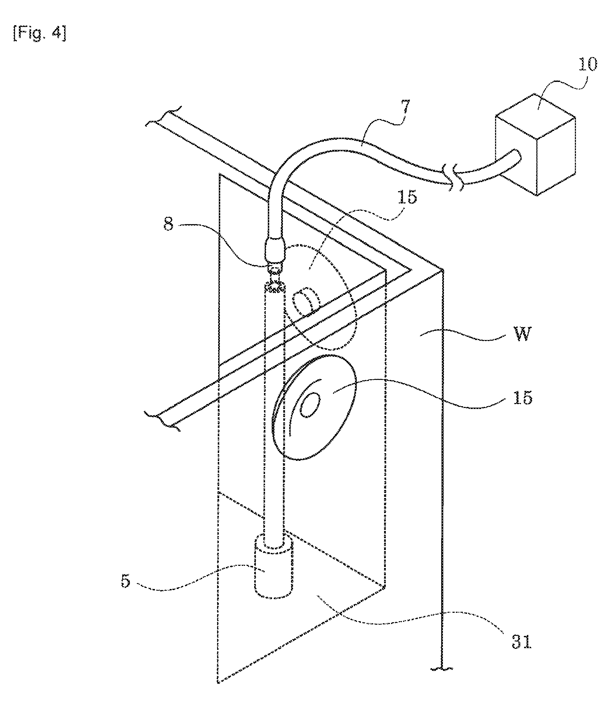

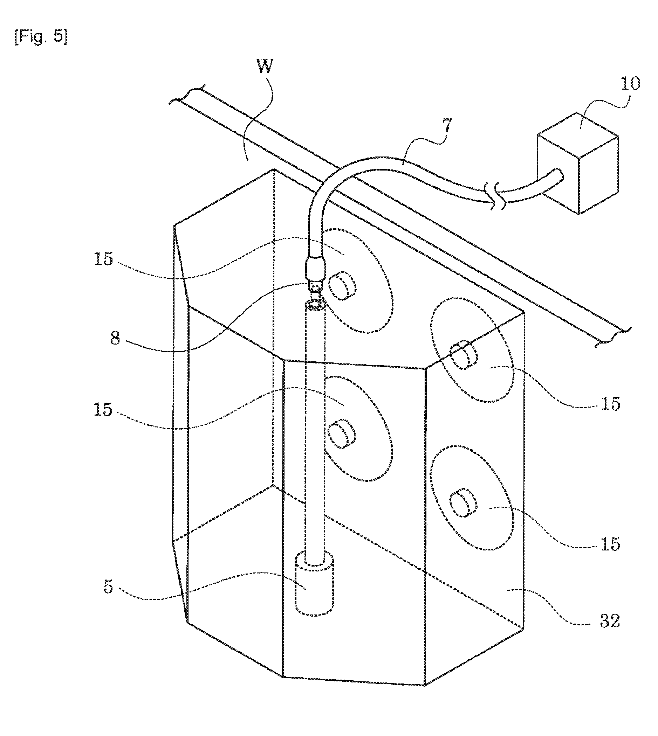

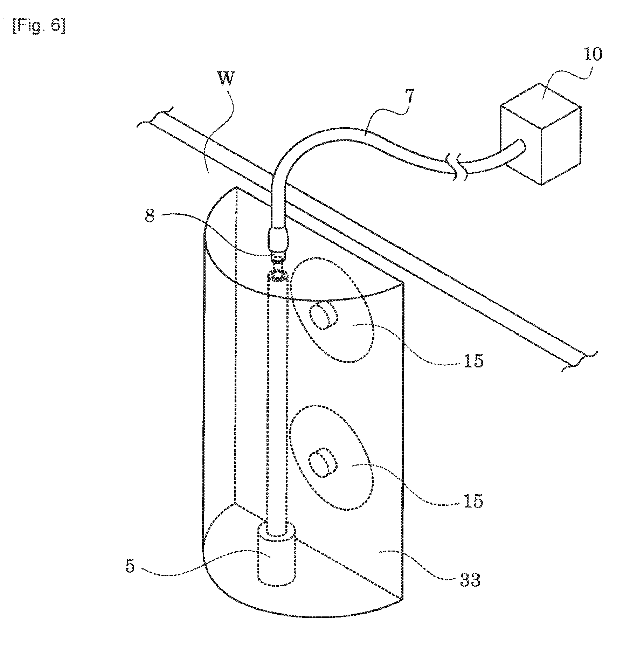

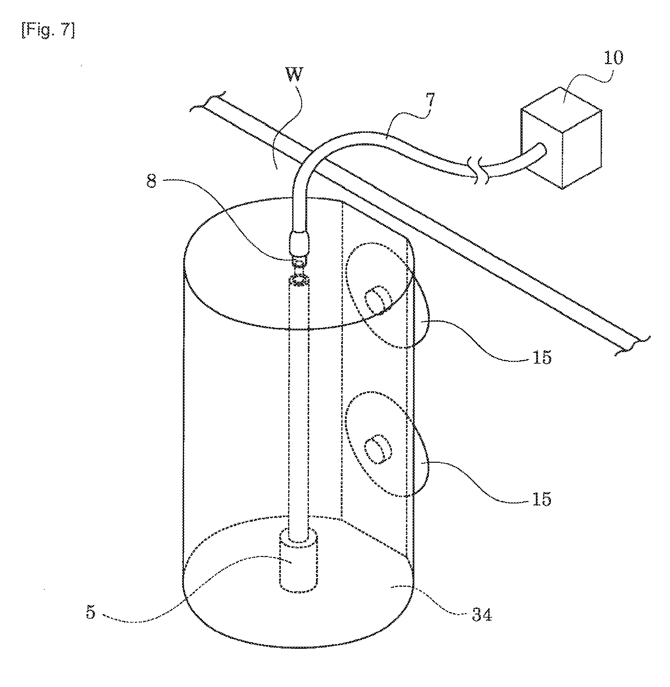

Figures 4 to 7 show the modification of the splash control apparatus for tanks of the first embodiment. Fig. 4 shows the example of the splash control apparatus for tanks having the triangular prism-like case 31. Fig. 5 shows the example of the splash control apparatus for tanks having the case 32 of trapezoid multiple pillar form in a horizontal cross section. Fig. 6 shows the example of the splash control apparatus for tanks having the semicircle pillar-like case. Fig. 7 shows the example of the splash control apparatus for tanks having the pillar-shaped case in which a part of side is plane.
Similar to the splash control apparatus for tanks of the present embodiment mentioned above, it can prevent that the air bubbles which exploded and its splash scatter in the exterior of the case.

### [Second embodiment]

The second embodiment of the present invention will be explained below, referring to drawing. Here, the explanation which overlapped the first embodiment is omitted and is explained focusing on a characteristic portion.

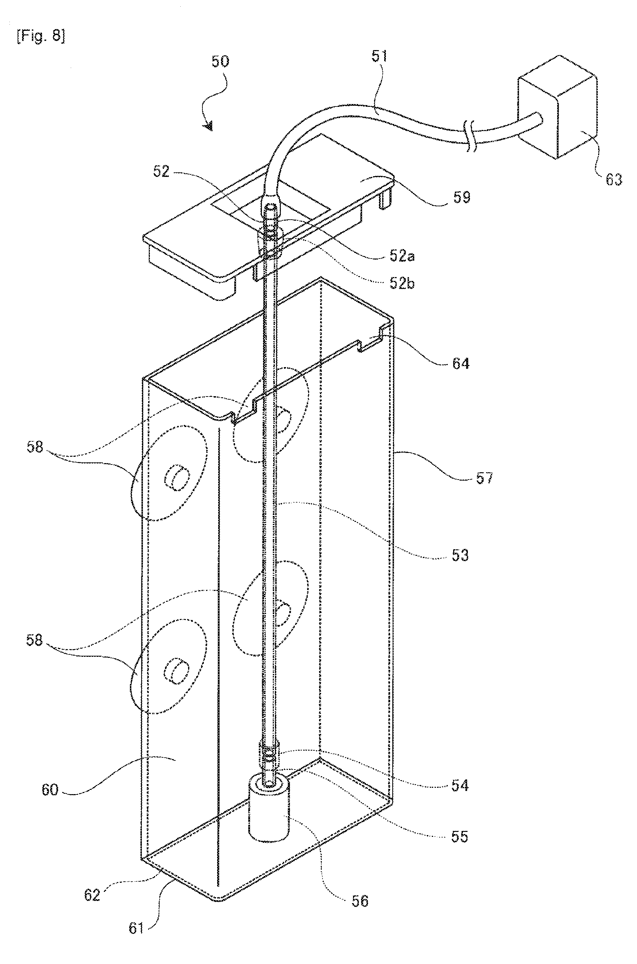

Fig. 8 is a perspective view of the splash control apparatus for tanks of the second embodiment.
As shown in Fig.8, splash control apparatus for tank 50 of the present embodiment has a features that it has a case 57 which is positioned inside of the water tank, hollow body, which has opening of potion of bottom side which is under water in the water tank, upper side is blockaded, a two pairs of suction cups 58,58 and 58, 58 which functions as a fixing material for fixing the case 57 to the inner side wall part of the tank, a air stone 56 which is positioned to the hollow portion 60 of the case 57, a connecting portion 52 which is connected with the air tube 51 which is from the external air pump 63 and installed in a part of the lid portion 59 and the air introduction pipe 53, a air introduction pipe 53 which functions as an air introduction path which connects between the connecting portion 52 and the air stone 56 so that gaseous circulation may be possible, and a air tube 54 for connecting a upper-part tubular portion 55 of the air stone 56 and the air introduction pipe 53.
A lid portion 59 which detachable and attachable freely (or open and close freely) is set to the upper part of the case 57.
Except for the hole 64, the upper space of the water surface is shut by the lid portion 59 of the case 57 and the upper part of the case 57, the air bubbles which exploded and its splash do not scatter in the exterior of the case 3 similarly to the first embodiment described above.
Further, since it has the lid portion 59 which can be opened and closed freely, the dirt of the inside of the case 57 can be cleaned simply. Note that, the hole 64 is not limited to one but you may make it prepare further two or more holes.

Moreover, the opening 62 which forms the opening to the bottom portion 61 of the box type case 57, the opening opens the whole of the bottom surface in a shape of a rectangle mostly, and the water in a tank flows in and out the hollow portion 60 of the case 57 through this opening 62.
Although the opening 62 is formed in the bottom 61 of the case 57, as long as it is a potion which make the case 57 hidden underwater, the opening may be formed at other portions. Further the form of the opening may not be limited in the shape of a rectangle, either, but other form may be sufficient.

And the second embodiment of the present invention has the feature that the connecting portion 52 is formed in the lid portion 59. That is, the air tube 51 from the external air pump 63 is connected to the upper side pipe shape portion 52a of the connecting portion 52 while extending the diameter a little, it is configured that the air introduction pipe 53 is inserted to the lower side opening portion 52b.
Namely, it is configured that the air introduction pipe 53 can be set to the lower side opening portion 52b easily only by inserting. Furthermore, the air tube 54 is set between the air introduction pipe 53 and the air stone 56. Thereby, the connection between the air stone 56 and the air introduction pipe 53 can be performed simply and smoothly.
This air introduction pipe 53 is made of hard plastic materials or glass materials in comparison rather than the air tube 51 and the air tube 54. Preferably it is made of plastic materials and glass materials which degradation is small even if it is touches the water which contains oxygen.
By selecting hard plastic material in comparison, when exchanging the air introduction pipe 53, a worker can find the air introduction pipe 53 easily and exchange only the air introduction pipe 53. Since the upper-part tubular portion 55 of the air stone 56 and air introduction pipe 53 is connected short air tube 54, attachment, and detachment of it can be performed easily.

As for the adjusted water in the aquarium fish breeding environment in a tank, ingredients, such as an organic matter and a mineral, also influence and degradation of resin generates. In that case, the air introduction pipe 9 is certainly exchangeable. Moreover, as mentioned above, since only work for inserting into the lower side opening portion 52b of the lid portion 59 is needed, exchange work is easy, and it is easy to keep the water always no dirt.

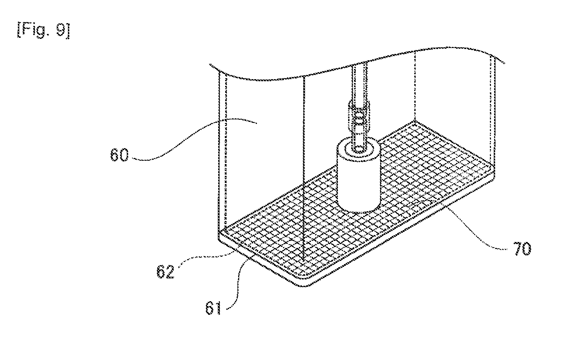

In the second embodiment, although the form of the case 3 has box type form, the form of a cylinder which is mentioned later, other multiple columns, for example, a triangular prism, a pentagonal prism, a hexagon pillar, etc. may be sufficient as it, and it can be arbitrarily set up according to the swimming domain of the form of a tank, or an aquarium fish.
In addition, as shown in Fig.9, the netted lid portion 70 which restrict fish go and out the hollow portion 60 and does not restrict a stream may be set while covering the opening 62 of the bottom portion 61.

## Claims

1. A splash control apparatus for water tank **characterized in** comprising:
a case which is arranged inside a tank and has hollow body, in which an opening is formed in a part of a side of a bottom which sinks within the tank and an upper part side is closed;
a fixing element for fixing the case to an inner side wall part of the tank;
an air stone set to the hollow part of the case;
a connecting portion which is set in a part of the cases and connected with an air tube from an external air pump; and
an air introduction path for connecting between the connecting portion and the air stones so that gaseous circulation may be possible.

2. A splash control apparatus for water tank as set forth in claim 1 **characterized in that:**
the case is a plastic product which is made of resin material.

3. A splash control apparatus for water tank as set forth in claim 1 **characterized in that:**
the fixing part element is a suction cap.

4. A splash control apparatus for water tank as set forth in claim 1 **characterized in that**:
the air introduction path is made of harder plastic materials in comparison rather than the air tube.

5. A splash control apparatus for water tank as set forth in claim 1 **characterized in that:**
a lid part which is attachable and detachable or can be opened and closed is set on the upper part of the case.

6. A splash control apparatus for water tank as set forth in claim 1 **characterized in** further comprising a lid part,
wherein the lid part is formed on the connecting portion,
the apparatus further comprises a below opening portion connecting between an upper tubular portion and the air introduction path.

7. A splash control apparatus for water tank as set forth in claim 1 **characterized in that**:
the air stone is connected with the air introduction path by the air tube having shorter length as compared with that of the air introduction path.

8. A splash control apparatus for water tank as set forth in claim 1 **characterized in** further comprising a netted lid part which covers a part of an opening of the upper bottle portion side.
